# EUROPEAN PATENT SPECIFICATION

(11) **EP 3 531 553 B1**
(45) Date of publication and mention of the grant of the patent: **04.05.2022**
(21) Application number: 17863258.4
(22) Date of filing: 15.09.2017
(51) Int. Cl.: H02P 25/08, H02M 7/48

(54) **SWITCHED RELUCTANCE MOTOR CONTROL SYSTEM AND SWITCHED RELUCTANCE MOTOR CONTROL METHOD**
STEUERUNGSSYSTEM FÜR GESCHALTETEN RELUKTANZMOTOR UND STEUERUNGSVERFAHREN FÜR GESCHALTETEN RELUKTANZMOTOR
SYSTÈME ET PROCÉDÉ DE COMMANDE DE MOTEUR À RÉLUCTANCE VARIABLE

(30) Priority: 20.10.2016 JP 2016206006
(43) Date of publication of application: 28.08.2019
(73) Proprietor: Mitsuba Corporation, Kiryu-shi, Gunma 376-8555 (JP)
(72) Inventor: YAMADA, Yoshihisa, Kiryu-shi, Gunma 376-8555 (JP); OGANE, Takahiko, Kiryu-shi, Gunma 376-8555 (JP); OKADA, Hiroaki, Kiryu-shi, Gunma 376-8555 (JP); MOTOHASHI, Yuya, Kiryu-shi, Gunma 376-8555 (JP); SEMBA, Daisuke, Kiryu-shi, Gunma 376-8555 (JP)
(74) Representative: Hoffmann Eitle
(86) International application number: PCT/JP2017/033455
(87) International publication number: WO 2018/074122

(56) References cited:
- CN-A- 103 475 112
- FR-A1- 2 861 915
- JP-A- 2013 150 491
- JP-A- 2015 139 350
- JP-A- 2015 231 323
- JP-A- 2016 082 791
- US-A1- 2008 197 816
- US-A1- 2015 381 098

## Description

### Technical Field

The present invention relates to a control technique for an SR motor (Switched Reluctance Motor) and, more particularly, to a control technique for synchronous rectification timing during regenerative operation.

### Background Art

Conventionally, in the field of electric motors, there is known a power generation technique for generating a regenerative current by using motor rotation to convert the kinetic energy of the motor into electric power. For example, in vehicles, such as automobiles and trains, regenerative operation is performed during deceleration to convert kinetic energy into electric energy to thereby generate electric power. The electric power thus obtained is charged in a battery or a capacitor, and the charged power is used at start-up or acceleration. Particularly, in the automobiles, braking effect can be obtained by the regenerative operation and, thus, an ISG (Integrated Starter Generator) system capable of performing regenerative operation is widely used as an engine starter motor.

Against the backdrop of rise in rare earth prices, there has recently been an increased demand for an SR motor as a motor that does not use magnets (permanent magnets) in a rotor. The SR motor has a simple and robust structure, so that the application range thereof is extended to an engine starter. Further, nowadays, with improvement of control technique, application of the SR motor to a starter/generator capable of performing regenerative operation is increased. The SR motor includes a stator having a plurality of inward salient poles around which excitation coils are wound and a rotor disposed inside the stator and having a plurality of outward salient poles. In general, no magnets are mounted to the rotor. The excitation coils are selectively energized to sequentially excite the inward salient poles of the stator to allow the inward salient poles of the stator to magnetically attract the outward salient poles of the rotor to thereby generate a rotational torque in the rotor.

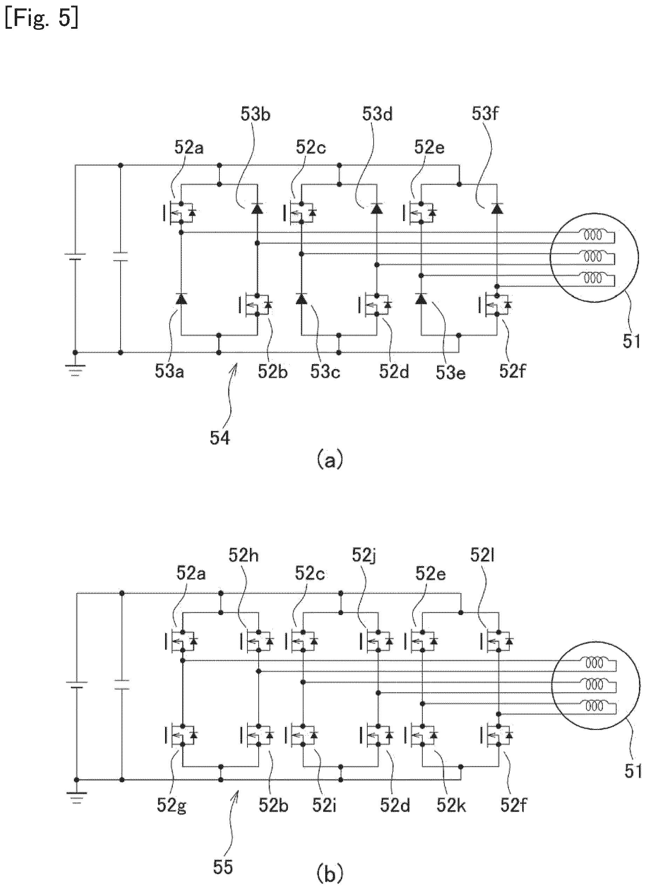

FIG. 5 is an explanatory view illustrating the configuration of the drive circuit of a three-phase SR motor. Conventionally, as a drive circuit for driving a three-phase SR motor 51, a drive circuit 54 as illustrated in FIG. 5A provided with FETs 52a to 52f and diodes 53a to 53f (two FETs and two diodes for each phase) is used. In the drive circuit 54, the FETs 52a to 52f are PWM controlled by a not-shown controller. For example, by turning ON the high-side FET 52a and low-side FET 52b, a desired U-phase current is supplied. Similarly, the FETs 52c to 52f are appropriately turned ON/OFF to supply a V-phase current and a W-phase current. As a result, coils of the respective phases are excited, whereby the SR motor 51 is driven into rotation.

On the other hand, in regenerative operation, in order for the SR motor to generate power, it is necessary to energize the excitation coils to generate magnetic flux since no magnet exists in the motor. Therefore, in the drive circuit 54, the FETs 52a and 52b are turned ON during the regenerative operation to temporarily energize and supply power to the SR motor (supply mode). As a result, magnetic flux is generated in the motor by way of the outward salient poles of the rotor. Then, when the rotor is rotated by external force, the generated magnetic flux is reduced by the rotation, with the result that electromotive force is generated in the excitation coils so as to maintain the magnetic flux. As a result, a regenerative current is generated in the excitation coils and flows to a power supply side through the diodes 53a and 53b to regenerate power (regenerative mode).

In recent years, in order to reduce loss due to diode energization during the power regeneration, a drive circuit 55 in which the diodes 53a to 53f are replaced with FETs 52g to 521 as illustrated in FIG. 5B is used. During the regenerative operation, the drive circuit 55 performs synchronous rectification control in which the FETs (e.g., FETs 52g and 52h) provided in place of the diodes are turned ON from a turn-OFF state in sync with the timing of an ON→OFF signal of the FETs (e.g., FETs 52a and 52b) in the supply mode. In this case, in the drive circuit in which the FETs 52a to 531 are PWM controlled, switching of the FETs is performed in sync with a PWM switching signal.

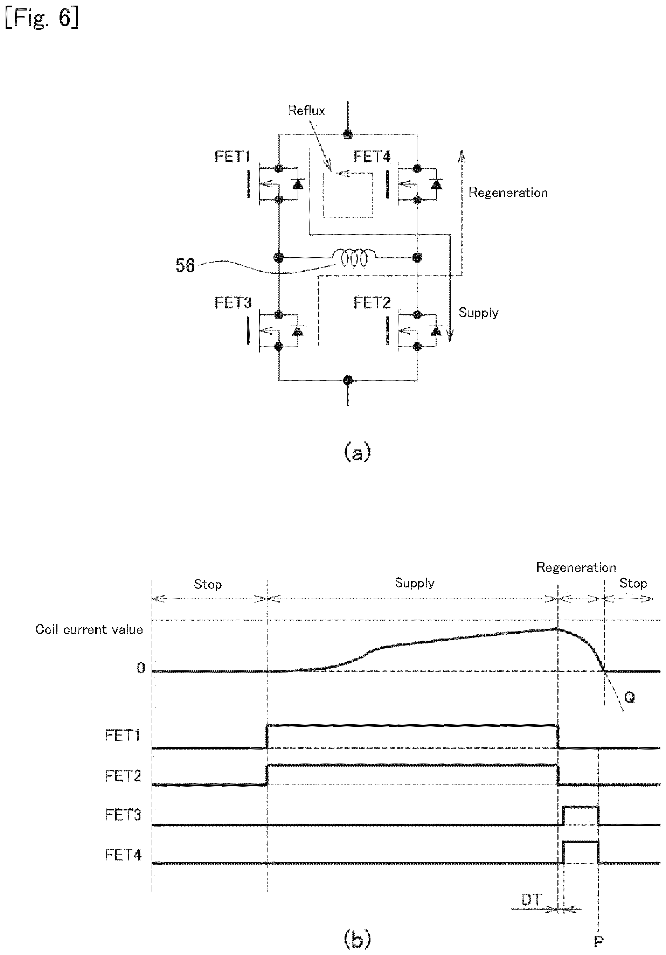

FIG. 6 is an explanatory view illustrating a control form (for one phase) when the SR motor is used to perform the regenerative operation. FIG. 6A illustrates the configuration of the drive circuit for one phase, and FIG. 6B illustrates the relationship between FET operation and a coil current value. As illustrated in FIG. 6B, in the regenerative operation, the stop mode, supply mode, and, thereafter, the regenerative mode where power regeneration is performed are sequentially carried out in this order, followed by return to the stop mode (in a discontinuous energization mode). In the supply mode, FETs 1 and 2 of FIG. 6A (corresponding to the FETs 52a and 52b of FIG. 5B) are turned ON and, thus, power is supplied to and current flows in an excitation coil 56. At this time, the FETs 1 and 2 are PWM controlled as described above.

Thereafter, the FETs 1 and 2 are turned OFF. Subsequently, FETs 3 and 4 (corresponding to the FETs 52g and 52h of FIG. 5B) are turned ON to start the regenerative mode. In the regenerative mode, electromotive force is generated in the excitation coil 56, causing a regenerative current to flow as illustrated in FIG. 6A. At mode switching timing, a through-current (power supply → high-side FET → low-side FET → power supply) may flow, so that a dead time DT in which all FETs are turned OFF is provided. For adjusting a power generation amount, a "reflux mode" in which both ends of an excitation coil 2 are set to the same potential to allow current to circulate in the bridge circuit of FIG. 6A may be appropriately performed in the "supply mode" or "regenerative mode".

US 2008/197816 A1 relates to a polyphase synchronous electric machine, for example a variable-reluctance motor, comprising a rotor, a permanent magnet or equivalent, integral with a spindle controlled in angular rotation, and a stator having a plurality of pair-wise opposite salient poles corresponding to the phases of the machine (see para 0004). An alternative embodiment of the polyphase synchronous electric machine comprises a rotor having a plurality of salient poles whose number is different from the number of the salient poles of the stator.

### Citation List

### Patent Document

Patent Document 1: JP 2013-150491 A
Patent Document 2: US 2008/197816 A1

### Disclosure of the Invention

### Problems to be Solved by the Invention

When the regenerative operation as described above is performed, the FETs 1 and 2 are PWM controlled during the supply mode, so that the synchronous rectification start timing of the regenerative mode can be calculated and set based on the end timing of the supply mode. However, no reference exists for calculating the end timing of the regenerative mode, so that the end point (point P of FIG. 6B) cannot be determined exactly. In this case, the end timing is not determined, and the FETs 3 and 4 may be kept in a turn-ON state, causing backward current to flow in the excitation coil (dashed line Q of FIG. 6B), which deteriorates power generation efficiency. Thus, when the synchronous rectification control is performed in a circuit like the drive circuit 55, the synchronous rectification is difficult to perform during the regenerative operation.

### Means for Solving the Problems

A switched reluctance motor control system according to the present invention is described in claim 1. An advantageous embodiment is described in claim 2. A method for controlling a switched reluctance motor according to the present invention is described in claim 3. An advantageous embodiment is described in claim 4.

### Advantageous Effects of the Invention

According to the SR motor control system of the present invention, there is provided the synchronous rectification part that determines an end time of the regenerative mode a map set with at least one of an advance angle, an energization angle, and a rotation speed of the SR motor as a parameter. Thus, the end timing of the regenerative mode that has so far been unclear can be made clear, making it possible to perform synchronous rectification control even during the regenerative mode. As a result, the regenerative operation can be performed at an optimum timing, allowing improvement in output characteristics at power generation and in power generation efficiency.

According to the SR motor control method of the present invention, an end time of the regenerative mode is determined based a map set with at least one of an advance angle, an energization angle, and a rotation speed of the SR motor as a parameter. Thus, the end timing of the regenerative mode that has so far been unclear can be made clear, making it possible to perform synchronous rectification control even during the regenerative mode. As a result, the regenerative operation can be performed at an optimum timing, allowing improvement in output characteristics at power generation and in power generation efficiency.

### Brief Description of the Drawings

[FIG. 1] A block diagram illustrating the configuration of an SR motor control system which is an example of a switched reluctance motor control system.
[FIG. 2] An explanatory view (for one phase) illustrating regenerative operation when the control system of FIG. 1 performs discontinuous energization control.
[FIG. 3] An explanatory view (for one phase) illustrating regenerative operation when the control system of FIG. 1 performs continuous energization control.
[FIG. 4] A block diagram illustrating the configuration of a driver circuit when the end timing of the regenerative mode is determined based on map data (embodiment of the invention).
[FIG. 5] An explanatory view illustrating the configuration of the drive circuit of a three-phase SR motor, in which FIG. 5A illustrates a normal type drive circuit that has conventionally been used, and FIG. 5B illustrates the configuration of a drive circuit when synchronous rectification control is performed.
[FIG. 6] An explanatory view illustrating a control form (for one phase) when the SR motor is used to perform the regenerative operation, in which FIG. 6A illustrates the configuration of the drive circuit for one phase, and FIG. 6B illustrates the relationship between FET operation and a coil current value.

### Best Mode for Carrying Out the Invention

An object of the embodiment of the invention described below is to provide an SR motor control system and an SR motor control method capable of making clear the end timing of the regenerative mode in the SR motor, thus enabling the synchronous rectification control during the regenerative operation.

### (Example of an SR motor control system)

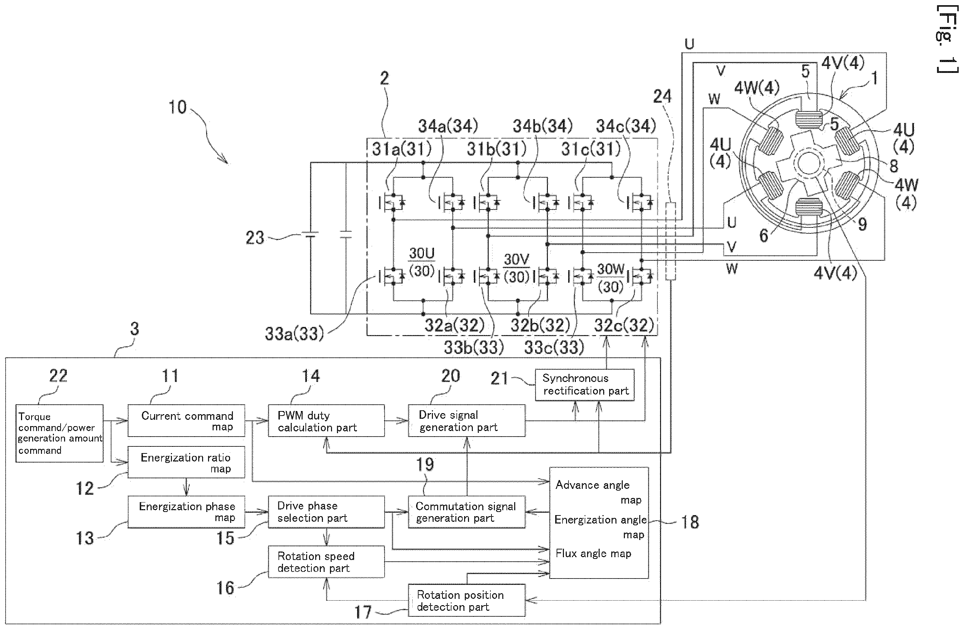

Hereinafter, an example of a SR motor control system will be described in detail based on the drawings. FIG. 1 is a block diagram illustrating the configuration of an SR motor control system 10 (hereinafter, abbreviated as "control system 10"), and a control method is carried out in the control system 10. As illustrated in FIG. 1, the control system 10 includes an SR motor 1, a driver circuit 2 that adjusts energization timing to the SR motor 1, and an energization control part (control device) 3 that controls the driver circuit 2. The SR motor 1 driven in the control system 10 is applied to, e.g., a starter/generator (ISG) for a vehicle engine and is directly connected to an engine crank shaft.

The SR motor 1 includes a stator 5 having an excitation coil (winding wire) 4 and a rotor 6 rotatably provided inside the stator 5. The stator 5 is provided with a plurality of salient poles 7 protruding radially inward. The salient poles 7 are wound with three-phase excitation coils 4 (4U, 4V, 4W). The rotor 6 is provided with a plurality of salient poles 8 protruding radially outward from the outer periphery thereof. The number of the salient poles 8 is different from the number of the salient poles 7 of the stator 5. The rotation position of the rotor 6 is detected by a rotation detection sensor 9 such as a resolver. The excitation coils 4 are selectively energized according to the rotor rotation position to cause the salient poles 8 of the rotor 6 to be magnetically attracted by the salient poles 7 of the stator 5. As a result, a rotational torque is generated in the rotor 6, whereby the SR motor 1 is driven into rotation.

As illustrated in FIG. 1, the energization control part 3 includes, as main constituent elements, a current command map 11, an energization ratio map 12, an energization phase map 13, a PWM (Pulse Width Modulation) duty calculation part 14, a drive phase selection part 15, a rotation speed detection part 16, a rotation position detection part 17, a map storage part 18, a commutation signal generation part 19, a drive signal generation part 20, and a synchronous rectification part 21. The control system 10 controls the driver circuit 2 based on a torque command/power generation amount command 22, supplies power to the SR motor 1 from a battery 23, and controls the driving of the SR motor 1.

The torque command/power generation amount command 22 sets/designates a value corresponding to a torque or a power generation amount required for the SR motor 1. For example, the torque command/power generation amount command 22 appropriately sets/designates a numerical value within a range of 0% to 100% with respect to a maximum torque or a maximum power generation amount according to a load or the like. The current command map 11 is a map storing a torque command value and a current command value in association with each other, and the current command value corresponding to the torque command value is selected and output therefrom. The current command value refers to a target value of current to be made to flow in the coils of the SR motor 1. The energization ratio map 12 is a map storing the torque command value and an energization ratio in association with each other, and the energization ratio corresponding to the torque command value is selected and output therefrom. The energization ratio refers to a ratio between a phase to be energized (energizing phase) and a phase not to be energized (non-energizing phase) when a control method of energizing the phases of the SR motor 1 in a thinning-out manner (i.e., when only some of the phases are energized) is adopted. The energization phase map 13 stores an energization pattern corresponding to the energization ratio supplied from the energization ratio map 12, and the energization pattern corresponding to the energization ratio is read out and output therefrom.

The PWM duty calculation part 14 calculates the duty of current to be made to flow from the driver circuit 2 to the SR motor 1 based on a coil current value detected by a current sensor (current detection means) 24 and a current command value supplied from the current command map 11 and supplies the calculated duty to the drive signal generation part 20. The drive phase selection part 15 selects a phase to be driven based on the energization pattern supplied from the energization phase map 13 and notifies the map storage part 18 and commutation signal generation part 19 of the selected phase. The rotation position detection part 17 converts an analog signal output from the rotation detection sensor 9 into a digital signal and outputs the obtained digital signal to the map storage part 18, the commutation signal generation part 19 and the rotation speed detection part 16. The rotation speed detection part 16 calculates a difference between signals supplied from the rotation position detection part 17 to detect the rotation speed of the SR motor 1 and supplies the detected rotation speed to the drive phase selection part 15 and the map storage part 18.

The map storage part 18 stores advance angle maps, energization angle maps, and reflux angle maps. The map storage part 18 selects the maps corresponding to the energization pattern and acquires and outputs an advance angle, an energization angle and a reflux angle corresponding to the rotation speed, current command value, etc. The map storage part 18 selects the corresponding maps according to the energization patterns of preceding and succeeding phases supplied from the drive phase selection part 15. The map storage part 18 acquires, from the selected maps, the current command value supplied from the current command map 11, and the advance angle, energization angle and reflux angle corresponding to the rotation speed value supplied from the rotation speed detection part 16 and outputs them to the commutation signal generation part 19.

The commutation signal generation part 19 forms energization pattern signals of the U-phase, V-phase and W-phase based on a rotor rotation position detected by the rotation position detection part 17. The formed energization pattern signals are adjusted in energization control timing based on the values of the advance angle, energization angle and reflux angle supplied from the maps stored in the map storage part 18. The drive signal generation part 20 generates a PWM control signal based on the energization pattern signal supplied from the commutation signal generation part 19 and the duty signal supplied from the PWM duty calculation part 14 and supplies the generated PWM control signal to the driver circuit 2. The generated PWM control signal is a signal in which a PWM signal based on the duty signal supplied from the PWM duty calculation part 14 is superimposed on the energization pattern signal of the U-phase, V-phase, or W-phase.

The synchronous rectification part 21 controls the regenerative operation of the SR motor 1 when it functions as a generator and performs switching of the supply mode or regenerative mode. In the example, which is not an embodiment of the invention, the synchronous rectification part 21 performs the supply mode based on the rotor rotation position and ends the regenerative mode based on the coil current value (regenerative current value) detected by the current sensor 24. In the supply mode, current is supplied from the driver circuit 2 to the excitation coils 4 based on a command from the synchronous rectification part 21. The regenerative mode is performed after the elapse of a certain dead time DT after the end of the supply mode. Then, the regenerative mode is ended at the timing when the regenerative current value of each excitation coil 4 becomes equal to or less than a predetermined threshold value SV to end the synchronous rectification in the regenerative operation.

The driver circuit 2 switches DC power output from the battery 23 according to a drive signal supplied from the drive signal generation part 20 and supplies the DC power to the excitation coils 4 constituting the respective phases of the SR motor 1. In the driver circuit 2, a bridge circuit (30U, 30V, or 30W) is formed for each phase. Each of the bridge circuits 30U, 30V, and 30W has four FETs (FETs 31 to 34) which are semiconductor switch elements. In each phase, two FETs are provided on the upper stage side (battery 23 side: high-side) of the SR motor 1, and two FETs are provided on the lower stage side (low-side) (high-side FETS: FETs 31a to 31c and FETs 34a to 34c, low-side FETs: FETs 32a to 32c and FETs 33a to 33c). The FETs 31 to 34 are appropriately turned ON/OFF by the drive signal from the drive signal generation part 20.

For example, in the control system 10, when the U-phase is excited to drive the SR motor 1, the drive signal generation part 20 turns ON the high-side FET 31a and low-side FET 32a to energize the U-phase excitation coil 4U of the SR motor 1. Similarly, the drive signal generation part 20 excites the V-phase (FET 31b and FET 32b: ON) and W-phase (FET 31c and FET 32c: ON) sequentially to drive the SR motor into rotation.

On the other hand, when the SR motor 1 is used as a generator, the FETs 31 to 34 are controlled by the synchronous rectification part 21 to regenerate power to the battery 23 side (power supply side). For example, in the regenerative operation for the U-phase, the FET 31a and FET 32a are turned ON to perform the supply mode. Then, after the elapse of the dead time DT, the FET 33a and FET 34a are turned ON to perform the regenerative mode. The regenerative operations for the V- and W-phases are performed in a similar manner. That is, in the V-mode, the FET 31b and FET 32b are turned ON to perform the supply mode, and the FET 33b and FET 34b are turned ON to perform the regenerative mode and, in the W-phase, the FET 31c and FET 32c are turned ON to perform the supply mode, and the FET 33c and FET 34c are turned ON to perform the regenerative mode.

In the regenerative operation, there exist discontinuous energization control in which current to be made to flow in the circuit is made zero except for during the supply and regenerative modes and continuous energization control in which wide-angle energization control is performed so as not to make the current zero. In the SR motor, magnetic energy generated in the excitation coil is changed by changing a current value to be made to flow in the excitation coil, so that the output characteristics (power generation characteristics) of the SR motor is changed depending on a current value to be made to flow in the excitation coil during the regenerative operation. Thus, in order to obtain a large output, it is necessary to make a necessary and sufficient supply (excitation) current flow. To achieve this, as a method of making a sufficient supply current flow, the continuous energization control in which energization operation is performed also at the time other than the supply and regenerative modes may be performed.

In the following description of the regenerative operation in the control system 10, a case where the regenerative operation is performed under the discontinuous energization control and a case where the regenerative operation is performed under the continuous energization control will be described separately. The discontinuous energization control and the continuous energization control may not necessarily be inconsistent with each other, and a control form may be possible, in which they are appropriately switched according to a motor operating state (advance angle value, energization angle value, rotation speed, etc.).

### (Regenerative Operation under Discontinuous Energization Control)

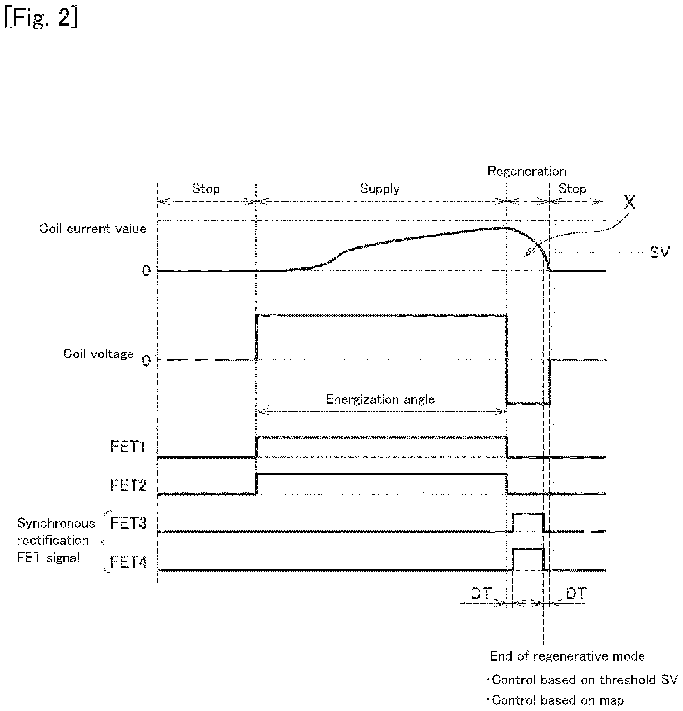

FIG. 2 is an explanatory view (for one phase) illustrating the regenerative operation when the control system 10 is performing the discontinuous energization control. Although the following description will be made taking the U-phase as an example, the same control as that for the U-phase is performed for the other phases. As illustrated in FIG. 2, since the discontinuous energization control is being performed, the "stop mode" where no energization is performed exists. Thus, the "stop mode", "supply mode" where energization is performed, and "regenerative mode" where power generation is performed are sequentially carried out in this order, followed by return to the "stop mode". In the present system as well, the "reflux mode" in which both ends of the excitation coil 2 are set to the same potential to allow current to circulate in the bridge circuit 30 may be appropriately performed in the "supply mode" or "regenerative mode" so as to adjust a power generation amount (for example, only the FET 31a is turned ON in the U-phase bridge circuit 30U) .

In the discontinuous energization control, the synchronous rectification part 21 turns ON the FET 31a and FET 32a when the rotor 6 reaches a predetermined rotation position (at a position immediately before a position where the salient pole 8 faces the salient pole 7). As a result, power is supplied to the excitation coil 4U, whereby a coil current flows ("supply mode"). The supply mode is performed by the synchronous rectification part 21 at a predetermined energization angle (electric angle). After ending the supply mode, the synchronous rectification part 21 turns ON the FET 33a and FET 34a after the elapse of the dead time DT and then performs the "regenerative mode". In the regenerative mode, although power supply to the excitation coil 4U is stopped, electromotive force is generated in the excitation coil 4U with rotation of the rotor 6 so as to maintain existing magnetic flux, with the result that a regenerative current is generated in the excitation coil 4U. Thus, as illustrated in FIG. 2, the coil current value is not made zero at once but is lowered while the regenerative current is made to flow. That is, power generation (regenerative) operation is performed (part denoted by arrow X in FIG. 2).

When the rotor 6 is rotated by a certain angle during the regenerative mode, the mode is switched from the regenerative mode to the stop mode. In this case, the start timing of the regenerative mode is clear since the end of the supply mode is clear, so that the synchronous rectification control can be easily performed. However, as described above, no clear index exists for determining the end timing of the regenerative mode, making it difficult to perform the synchronous rectification control. On the other hand, the current value (coil current value) of the excitation coil 4U is monitored and, when the current value becomes equal to or less than the predetermined threshold SV, the regenerative mode is ended.

As illustrated in FIG. 2, in the regenerative mode, the current value is gradually lowered and becomes 0 in due course. At this time, when the FET 33a and FET 34a are kept in a turn-ON state, backward current may flow in the excitation coil 4U. Thus, in the control system 10, the threshold value SV is set to the timing before the coil current value becomes 0 at which (preferably, at the last moment when) the backward current does not flow even when the FET 33a and FET 34a are turned OFF, and the regenerative mode is ended.

The threshold value SV is determined by previous experiments or analyses according to the specification of the motor (e.g., about 5% to 10% of the peak value of the coil current value). The synchronous rectification part 21 determines the end time of the regenerative mode based on the above setting and outputs a command signal to the driver circuit 2 to turn OFF the FET 33a and FET 34a to thereby end the regenerative mode. Thus, the end timing of the regenerative mode that has conventionally been unclear can be made clear, making it possible to perform the synchronous rectification control for the regenerative mode both at the start and the end thereof. As a result, the regenerative operation can be performed at an optimum timing, allowing improvement in output characteristics at power generation and power generation efficiency.

### (Regenerative Operation under Continuous Energization Control)

### (1) Control based on Threshold SV

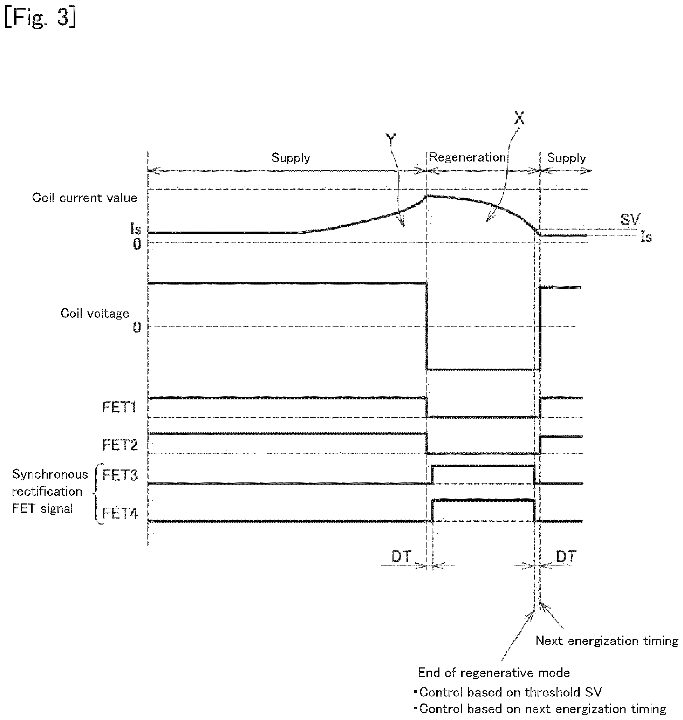

FIG. 3 is an explanatory view (for one phase) illustrating the regenerative operation when the control system 10 is performing the continuous energization control. As illustrated in FIG. 3, since the continuous energization control is being performed, the "stop mode" where no energization is performed does not exists. Thus, the "regenerative mode" is performed between the "supply modes". In this case as well, the "reflux mode" may appropriately be performed.

In the continuous energization control, the synchronous rectification part 21 always turns ON the FET 31a and FET 32a except for the regenerative mode and, thus, small current Is flows in the excitation coil 4U. In this state, when the rotor 6 reaches a predetermined rotation position, power supply to the excitation coil 4U is increased. As a result, the amount of current flowing in the excitation coil 4U is increased (current increasing part Y in the "supply mode"). The current increasing part Y is performed by the synchronous rectification part 21 at a predetermined angle (electric angle). After ending the current increasing part Y (supply mode), the synchronous rectification part 21 turns ON the FET 33a and FET 34a after the elapse of the dead time DT and then performs the "regenerative mode". In the regenerative mode, regenerative current is generated in the excitation coil 4U, and power generation (regenerative) operation is performed (FIG. 3: regenerative part X).

In the same manner as above, when the rotor 6 is rotated by a certain angle during the regenerative mode, the mode is switched from the regenerative mode to the stop mode. In this case as well, the current value (coil current value) of the excitation coil 4U is monitored and, when the current value becomes equal to or less than the predetermined threshold SV, the regenerative mode is ended. In the continuous energization control, a value slightly higher than the small current value Is during the supply mode is set as the threshold SV so as to secure the dead time DT between the regenerative mode and the next supply mode, and the regenerative mode is ended based on the thus set threshold value SV. Thus, the unclear end timing of the regenerative mode is made clear, making it possible to perform the synchronous rectification control for the regenerative mode both at the start and the end thereof. As a result, the regenerative operation can be performed at an optimum timing, allowing improvement in output characteristics at power generation and power generation efficiency.

### (2) Control based on next energization timing

In the continuous energization control, the backward current does not flow, so that the end timing of the regenerative mode can be calculated based on the time point at which the next supply mode is started. Thus, the synchronous rectification part 21 determines the end time of the regenerative mode based on the start of the supply mode to be carried out after the current regenerative mode. That is, the synchronous rectification part 21 ends the regenerative mode at a timing prior, by the dead time DT, to the energization start timing at which the drive signal for turning ON the FET 31a and FET 32a is transmitted next time. This makes the end timing of the regenerative mode clear, making it possible to perform the synchronous rectification control for the regenerative mode both at the start and the end thereof. In the control form of FIG. 3, the regenerative mode is ended at the same timing in the control forms (1) (control based on the threshold SV) and (2) (control based on the next energization timing).

### (Embodiment of the invention)

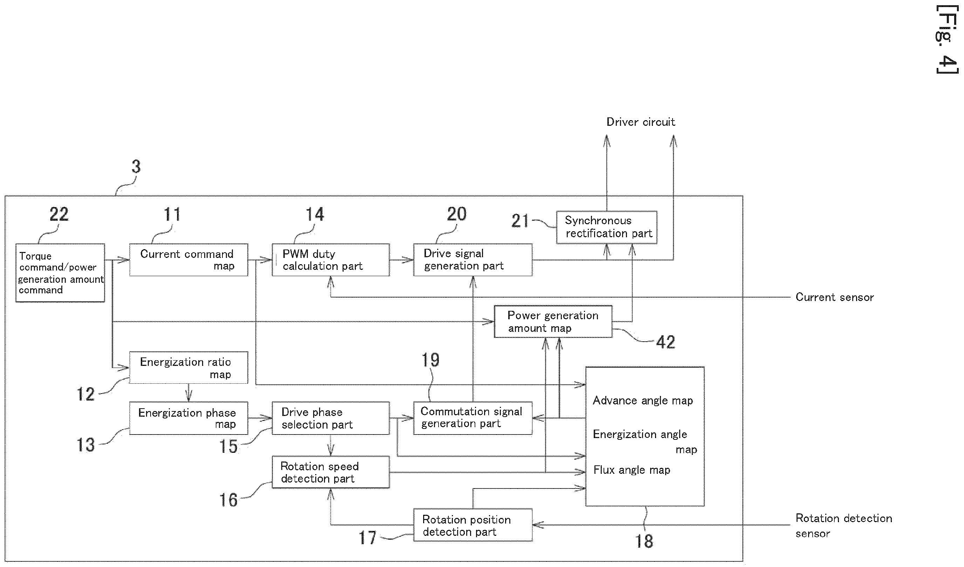

The following describes, as an embodiment of the present invention, a configuration that determines the end timing of the regenerative mode based on map data. FIG. 4 is a block diagram illustrating the configuration of a driver circuit in this case. The constituent elements other than the driver circuit are the same as those in the example (FIG. 1). Further, in the driver circuit as well, the same reference numerals are given to the same components as in the first embodiment and description thereof will be omitted.

As illustrated in FIG. 4, a driver circuit 41 used in an SR motor control system 40 (hereinafter, abbreviated as "control system 40") of the embodiment includes, in addition to the driver circuit 2 of FIG. 1, a power generation amount map 42. The power generation amount map 42 describes, as map data, a power generation amount during the regenerative mode with the advance angle value, energization angle value, rotation speed, or the like as a parameter. The map data indicates the timing at which the backward current does not flow even when the FET 33a and FET 34a are turned OFF in a manner corresponding to each parameter.

In this case, the SR motor 1 is driven under the discontinuous energization control, and the synchronous rectification part 21 ends the regenerative mode by referring to the power generation amount map 42 (in the same manner as in FIG. 2). As a result, the end timing of the regenerative mode is made clear, making it possible to perform the synchronous rectification control for the regenerative mode both at the start and the end thereof. The above-described control based on the power generation amount map 42 is applicable both to the continuous energization control and the discontinuous energization control. However, as described above, in the discontinuous energization control, there exist other methods of determining the end timing of the regenerative mode, so that the control based on the power generation amount map 42 is preferably applied to the continuous energization control. Further, as the parameters of the power generation amount map 42, the coil current value can be used in addition to the advance angle, energization angle, and rotation speed.

The present invention is not limited to the above embodiment, but may be variously modified without departing from the scope of the invention as defined by the appended claims.

For example, in the above embodiment, the present invention is applied to the three-phase driven SR motor; however, the present invention can also be applied to a two-phase driven or four- or more phase driven SR motor. Further, the value given as the threshold value SV is illustrative, and the present invention is not limited to the above-described numerical value.

### Industrial Applicability

The SR motor control system and method according to the present invention can be widely applied to drive control not only for a starter/generator for an engine, but also for other on-vehicle SR motors such as a drive motor for electric cars and an SR motor used in home electric appliances, industrial machines, and the like.

### Reference Signs List

- 1:: SR motor
- 2:: Driver circuit
- 3:: Energization control part
- 4:: Excitation coil
- 4U:: U-phase excitation coil
- 4V:: V-phase excitation coil
- 4W:: W-phase excitation coil
- 5:: Stator
- 6:: Rotor
- 7:: Salient pole
- 8:: Salient pole
- 9:: Rotation detection sensor
- 10:: SR motor control system
- 11:: Current command map
- 12:: Energization ratio map
- 13:: Energization phase map
- 14:: PWM duty calculation part
- 15:: Drive phase selection part
- 16:: Rotation speed detection part
- 17:: Rotation position detection part
- 18:: Map storage part
- 19:: Commutation signal generation part
- 20:: Drive signal generation part
- 21:: Synchronous rectification part
- 22:: Torque command/power generation amount command
- 23:: Battery
- 24:: Current sensor
- 30U, 30V, 30W:: Bridge circuit
- 31, 31a to 31c:: FET
- 32, 32a to 32c:: FET
- 33, 33a to 33c:: FET
- 34, 34a to 34c:: FET
- 40:: SR motor control system
- 41:: Driver circuit
- 42:: Power generation amount map
- 51:: SR motor
- 52a to 521:: FET
- 53a to 53f:: Diode
- 54:: Drive circuit
- 55:: Drive circuit
- 56:: Excitation coil
- DT:: Dead time
- Is:: Small current (in continuous energization mode)
- SV:: Threshold value
- X:: Regenerative part
- Y:: Current increasing part

## Claims

1. A switched reluctance motor control system comprising:
a switched reluctance motor (1) including a stator (5) having a plurality of salient poles (7), a rotor (6) having a plurality of salient poles (8) whose number is different from the number of the salient poles (7) of the stator (5), and a coil (4) wound around the salient poles of the stator (5);
a driver circuit (2) having a switch element (31, 32, 33, 34) for adjusting an energization timing to the coil (4); and
an energization control part (3) that controls ON/OFF of the switching element (31, 32, 33, 34), wherein
the switched reluctance motor has a supply mode in which the coil (4) is energized and a regenerative mode in which electromotive force generated in the coil (4) is recovered,
**characterised in that**
the energization control part (3) has a synchronous rectification part (21) that determines an end time of the regenerative mode based on a map set with at least one of an advance angle, an energization angle, and a rotation speed of the SR motor as a parameter.

2. The switched reluctance motor control system according to claim 1, wherein
the switched reluctance motor (1) further has a stop mode in which the coil (4) is not energized.

3. A method of controlling a switched reluctance motor (1) including a stator (5) having a plurality of salient poles (7), a rotor (6) having a plurality of salient poles (8) whose number is different from the number of the salient poles (7) of the stator (5), and a coil (4) wound around the salient poles of the stator (5), wherein
the switched reluctance motor (1) has a supply mode in which the coil is energized and a regenerative mode in which electromotive force generated in the coil (4) is recovered,
**characterised in that**
an end time of the regenerative mode is determined - based on a map set with at least one of an advance angle, an energization angle, and a rotation speed of the SR motor as a parameter.

4. The method according to claim 3, wherein
the switched reluctance motor (1) further has a stop mode in which the coil (4) is not energized.

## Patentansprüche

1. Steuerungssystem für geschalteten Reluktanzmotor, umfassend:
einen geschalteten Reluktanzmotor (1), beinhaltend einen Stator (5) mit einer Vielzahl von hervorstehenden Stangen (7), einen Rotor (6) mit einer Vielzahl von hervorstehenden Stangen (8), deren Anzahl sich von der Anzahl der hervorstehenden Stangen (7) des Stators (5) unterscheidet, und eine um die hervorstehenden Stangen des Stators (5) herum gewickelte Spule (4);
eine Antriebsschaltung (2) mit einem Schaltelement (31, 32, 33, 34) zum Anpassen eines Bestromungszeitablaufs an der Spule (4); und
ein Bestromungssteuerungsteil (3), das AN/AUS des Schaltelements (31, 32, 33, 34) steuert, wobei
der geschaltete Reluktanzmotor einen Versorgungsmodus, in dem die Spule (4) bestromt wird, und einen regenerativen Modus aufweist, in dem in der Spule (4) erzeugte elektromotorische Kraft zurückgewonnen wird,
**dadurch gekennzeichnet, dass**,
das Bestromungssteuerungsteil (3) ein Teil (21) zur synchronen Rektifikation aufweist, das einen Endzeitpunkt des regenerativen Modus bestimmt basierend auf einem Kartensatz mit mindestens einem von einem Zündwinkel, einem Bestromungswinkel und einer Rotationsgeschwindigkeit des SR-Motors als ein Parameter.

2. Steuerungssystem für geschalteten Reluktanzmotor nach Anspruch 1, wobei
der geschaltete Reluktanzmotor (1) weiter einen Stoppmodus aufweist, in dem die Spule (4) nicht bestromt wird.

3. Verfahren zum Steuern eines geschalteten Reluktanzmotors (1), beinhaltend einen Stator (5) mit einer Vielzahl von hervorstehenden Stangen (7), einen Rotor (6) mit einer Vielzahl von hervorstehenden Stangen (8), deren Anzahl sich von der Anzahl der hervorstehenden Stangen (7) des Stators (5) unterscheidet, und eine um die hervorstehenden Stangen des Stators (5) herum gewickelte Spule (4), wobei
der geschaltete Reluktanzmotor (1) einen Versorgungsmodus, in dem die Spule (4) bestromt wird, und einen regenerativen Modus aufweist, in dem in der Spule (4) erzeugte elektromotorische Kraft zurückgewonnen wird,
**dadurch gekennzeichnet, dass** ein Endzeitpunkt des regenerativen Modus bestimmt wird
- basierend auf einem Kartensatz mit mindestens einem von einem Zündwinkel, einem Bestromungswinkel und einer Rotationsgeschwindigkeit des SR-Motors als ein Parameter.

4. Verfahren nach Anspruch 3, wobei
der geschaltete Reluktanzmotor (1) weiter einen Stoppmodus aufweist, in dem die Spule (4) nicht bestromt wird.

## Revendications

1. Système de commande de moteur à réluctance commutée comprenant :
un moteur à réluctance commutée (1) incluant un stator (5) comportant une pluralité de pôles saillants (7), un rotor (6) comportant une pluralité de pôles saillants (8) dont un nombre est différent du nombre des pôles saillants (7) du stator (5), et une bobine (4) enroulée autour des pôles saillants du stator (5) ;
un circuit d'attaque (2) comportant un élément de commutation (31, 32, 33, 34) pour ajuster un timing de mise sous tension de la bobine (4) ; et
une partie de commande de mise sous tension (3) qui commande l'activation/la désactivation de l'élément de commutation (31, 32, 33, 34), dans lequel
le moteur à réluctance commutée comporte un mode d'alimentation dans lequel la bobine (4) est mise sous tension et un mode de régénération dans lequel une force électromotrice générée dans la bobine (4) est récupérée,
**caractérisé en ce que**
la partie de commande de mise sous tension (3) comporte une partie de redressement (21) qui détermine un temps de fin du mode de régénération sur la base d'un mappage défini avec au moins l'un parmi un angle d'avancement, un angle de mise sous tension, et une vitesse de rotation du moteur SR en tant qu'un paramètre.

2. Système de commande de moteur à réluctance commutée selon la revendication 1, dans lequel
le moteur à réluctance commutée (1) comporte en outre un mode d'arrêt dans lequel la bobine (4) n'est pas mise sous tension.

3. Procédé de commande d'un moteur à réluctance commutée (1) incluant un stator (5) comportant une pluralité de pôles saillants (7), un rotor (6) comportant une pluralité de pôles saillants (8) dont un nombre est différent du nombre des pôles saillants (7) du stator (5), et une bobine (4) enroulée autour des pôles saillants du stator (5), dans lequel
le moteur à réluctance commutée (1) comporte un mode d'alimentation dans lequel la bobine est mise sous tension et un mode de régénération dans lequel une force électromotrice générée dans la bobine (4) est récupérée,
**caractérisé en ce qu'**un temps de fin du mode de régénération est déterminé
- sur la base d'un mappage défini avec au moins l'un parmi un angle d'avancement, un angle de mise sous tension, et une vitesse de rotation du moteur SR en tant qu'un paramètre.

4. Procédé selon la revendication 3, dans lequel
le moteur à réluctance commutée (1) comporte en outre un mode d'arrêt dans lequel la bobine (4) n'est pas mise sous tension.
